# EUROPÄISCHE PATENTSCHRIFT

(11) **EP 1 503 932 B1**
(45) Veröffentlichungstag und Bekanntmachung des Hinweises auf die Patenterteilung: **31.08.2005**
(21) Anmeldenummer: 03714856.6
(22) Anmeldetag: 19.03.2003
(51) Int. Cl.: B62D 33/067, B62D 21/15, B62D 21/02

(54) **ANBINDUNG FÜR EIN FAHRERHAUS**
LINKAGE FOR A DRIVER'S CAB
SYSTEME D'ATTACHE POUR CABINE DE CONDUITE

(30) Priorität: 14.05.2002 DE 10221346
(43) Veröffentlichungstag der Anmeldung: 09.02.2005
(73) Patentinhaber: DaimlerChrysler AG, 70567 Stuttgart (DE)
(72) Erfinder: BOLLINGER, Walter, 71364 Winnenden (DE); MCKELLIP, Spenser, 70327 Stuttgart (DE); RÜHLE, Markus, 73773 Aichwald (DE)
(86) Internationale Anmeldenummer: PCT/EP2003/002849
(87) Internationale Veröffentlichungsnummer: WO 2003/095291

(56) Entgegenhaltungen:
- WO-A-00/18633
- DE-A- 4 413 414
- PATENT ABSTRACTS OF JAPAN vol. 1997, no. 01, 31. Januar 1997 (1997-01-31) & JP 08 230724 A (MITSUBISHI MOTORS CORP), 10. September 1996 (1996-09-10)

## Beschreibung

Die Erfindung betrifft eine Anbindung für ein Fahrerhaus an einem Rahmen eines Fahrzeugs gemäß dem Oberbegriff des Patentanspruchs 1.

Die Fahrzeugsicherheit ist mittlerweile auch bei der Entwicklung von Nutzfahrzeugen ein wichtiges Ziel. Dabei spielt unter anderem die Auslegung der Anbindung des Fahrerhauses an den Fahrzeugrahmen eine große Rolle. Orientiert man sich am realen Umfallgeschehen, so ist erkennbar, dass der für die Auslegung eines Fahrerhauses bzw. der zugehörigen Fahrerhauslagerung kritische Unfalltyp das Auffahren auf einen vorausfahrenden LKW ist. Die Situation ist besonders dann problematisch, wenn die Rahmensysteme oder der Aufbau der aufeinanderfahrenden Fahrzeuge auf unterschiedlicher Höhe angeordnet sind. In einem solchen Fall wird nämlich bei keinem Fahrzeug die Aufprallenergie direkt in das Rahmensystem eingeleitet, sondern es sind Bauteile betroffen, die oberhalb bzw. unterhalb des Rahmens angeordnet sind. In den wenigsten Fällen wird die Aufprallenergie in das Rahmensystem direkt eingeleitet. Ein Fahrerhaus wird insbesondere dann in Mitleidenschaft gezogen, wenn das Rahmensystem, Aufbau oder Anhängerheck des vorausfahrenden Fahrzeugs höher ist als das des dahinter fahrenden Fahrzeugs.

Aus der DE 198 31 314 A1 ist eine Anbindung für ein Fahrerhaus an einem Rahmen eines Fahrzeugs bekannt, welche eine gefederte Lagereinheit aufweist, die ein Kippen des Lagerhauses ermöglicht. Des weiteren weist die Anbindung ein Verbindungselement auf, über welches eine Verbindung zwischen der Lagereinheit und dem Rahmen hergestellt wird. Bei der bekannten Anordnung besteht das Verbindungselement aus mehreren Komponenten. Zum einen ist ein Federhalterarm vorgesehen. Neben dem Federhalterarm ist ein mehrteiliges Anbindungselement vorgesehen, welches einen Längsarm sowie einen Lagerbock aufweist, die miteinander in Verbindung stehen. Das mehrteilige Anbindungselement ist so ausgelegt, dass es sich im Fall eines Aufpralls energieverzehrend deformiert und die Verbindung zwischen Fahrerhaus und Rahmen möglichst lange hält.

Nachteilig an der bekannten Anordnung ist, dass sie aufwendig in der Herstellung und damit teuer ist. So müssen mehrere Teile hergestellt und montiert werden. Des weiteren müssen die einzelnen Teile von der Werkstoffbeschaffenheit und ihrer Form so gestaltet werden, dass die gewünschte energieverzehrende Wirkung bei der Deformation eintritt und dass die Deformation ebenfalls in der gewünschten Weise eintritt. So ist beispielsweise der Längsarm leicht nach oben durchgebogen und - von oben betrachtet - ungerade ausgeführt. In den Lagerbock sind gezielt Einbuchtungen aufgebracht.

Vor diesem Hintergrund liegt der vorliegenden Erfindung die Aufgabe zugrunde, eine Anbindung für ein Fahrerhaus an einem Rahmen eines Fahrzeugs zu schaffen, die eine möglichst hohe Insassensicherheit sowie größtmöglichen Schutz Dritter gewährleistet und die gleichzeitig kostengünstig herzustellen ist.

Diese Aufgabe wird erfindungsgemäß durch eine Anbindung für ein Fahrerhaus an einem Rahmen eines Fahrzeugs gemäß dem Oberbegriff des Patentanspruchs 1 durch die kennzeichnenden Merkmale dieses Anspruchs gelöst.

Demnach zeichnet sich die Erfindung durch ein Fangelement aus, welches mit seinem einen Ende an dem Verbindungselement und mit seinem anderen Ende an dem Rahmen festgelegt ist. Das Fangelement stellt neben dem Verbindungselement eine zusätzliche Verbindung zwischen Fahrerhaus und Rahmen dar - die im Normalbetrieb nicht wesentlich belastet wird - und dient dazu, in das Fahrerhaus oder die Lagereinheit bei einem Aufprall eingeleitete Kräfte in den Rahmen weiterzuleiten, sich zu deformieren und eine zuverlässige Verbindung zwischen Fahrerhaus und Rahmen zu gewährleisten. Mit anderen Worten: durch das Fangelement wird das Fahrerhaus solange geführt verschoben, bis ein Zurückverlagern aufgrund eines Anstoßens eines eindringenden Hindernisses an den Motorblock nicht mehr möglich ist. Durch die erfindungsgemäße Lösung wird das Risiko eines vollständigen Lösens des Fahrerhauses vom Rahmen minimiert. Dadurch wird zum einen die Insassensicherheit erhöht und zum anderen die potentielle Gefährdung Dritter reduziert, da das Fahrerhaus auch nach dem Aufprall auf dem Rahmen gehalten wird. Hinzu kommt, dass die potentielle Gefährdung Dritter reduziert wird.

Ein anderer Aspekt der Erfindung ist der, dass das Fangelement einfach herzustellen ist, weil es einteilig ausgeführt werden kann. Bezogen auf die Kosten ist noch ein weiterer Vorteil zu beachten, die übrige Konstruktion muss nur in geringem Umfang verändert werden. Es muss lediglich ein weiteres Bauteil, nämlich das Fangelement hergestellt und montiert werden.

Gemäß einer Ausführungsform ist der Anbindungspunkt des Fangelements an dem Rahmen von vorne gesehen hinter einem Anbindungspunkt des Verbindungselements am Rahmen angeordnet. Dadurch wird erreicht, dass nach dem Versagen der rahmenseitigen Verbindung der Lagereinheit eine genügend große Rückverlagerung des Fahrerhauses unter der Deformation der Fangbleche stattfinden kann. Die Bleche werden hierbei nicht durch übermäßige Zugbelastung beansprucht sondern unterliegen einer definierten Faltung.

Gemäß einer weiteren Ausführungsform ist das Fangelement in Längsrichtung so ausgebildet, dass der Anbindungspunkt Fangelement/Rahmen von vorne gesehen näher zur Mitte als der Anbindungspunkt Verbindungselement/Rahmen angeordnet ist. Dies ermöglicht eine definierte Faltung der Bleche.

Das Fangelement kann beispielsweise aus einem Blech bestehen. Auf diese Weise ist es einfach und kostengünstig herzustellen. Es kann durch Stanzen und/oder Biegen in seine Form gebracht werden und es sind - im Gegensatz zu Gussteilen - keine speziell angefertigten Formen zur Herstellung notwendig.

Das Fangelement kann aus einem Material mit einer hohen Duktilität bestehen. Dies hat den Vorteil, dass es zäh ist und gleichzeitig eine hohe Dehnfähigkeit aufweist. Diese Eigenschaften erfüllt beispielsweise der Stahl S500MC (Stahl EN10149, Werkstoffnummer 1.0984). Diese Materialeigenschaften begünstigen im Falle eines Aufpralls eine gute Verformbarkeit des Fangelementes ohne, dass seine Versagensgrenze überschritten wird. Auf diese Weise wird sichergestellt, dass zwischen dem Verbindungselement und dem Rahmen möglichst lange eine Verbindung bestehen bleibt, die eine Anbindung des Fahrerhauses an den Rahmen gewährleistet. Somit wird vermieden, dass sich das Fahrerhaus von dem Rahmen löst. Zudem kann bei der Verformung des Fangelementes ein Teil der eingeleiteten Energie absorbiert werden, so dass nur noch ein reduzierter Anteil an Energie in den Rahmen eingeleitet werden muss. Simulationen haben gezeigt, dass etwa 13% der ursprünglich eingeleiteten Energie über die Verformung des Fangelementes absorbiert werden können. Die eigentliche Energieabsorbtion findet in dem Moment statt, in dem eine Rückverlagerung des Fahrerhauses nicht mehr möglich ist oder das eindringende Hindernis am Motorblock anstößt.

Das Fangelement kann über seine gesamte Länge eine im wesentlichen gleiche Breite aufweisen. Seine Endbereiche können abgerundet sein. In das Fangelement können Bohrungen zur Aufnahme von Befestigungselementen eingebracht sein.

Zwischen dem Verbindungselement und dem Rahmen kann eine Konsole vorgesehen sein. Diese Konsole hat den Zweck, die Lagereinheit und somit das gesamte Fahrerhaus relativ zum Rahmen zu adaptieren. Sie nimmt an ihrem nach oben weisenden Ende die Lagereinheit auf und ist mit ihren nach unten weisenden Enden mit dem Rahmen verbunden. Die Konsole kann aus einem spröden Werkstoff bestehen. Diese Werkstoffeigenschaften erfüllt beispielsweise der Gusswerkstoff GGG60. Die relativ geringe Dehnfähigkeit des Werkstoffs wurde gewählt, um ein Versagen der Konsole im Kollisionsfall gegebenenfalls zu gewährleisten.

Die Konsole kann an zwei voneinander beabstandeten Stellen mit dem Rahmen verbunden sein, von denen die eine Stelle von vorne gesehen hinter der anderen Stelle liegt. Dazu kann die Konsole zwei Schenkel aufweisen, die wie bei einem umgekehrten V angeordnet sind und oben zusammenlaufen.

In dem Fall, in dem zwischen dem Verbindungselement und dem Rahmen eine solche Konsole vorgesehen ist, kann sich das Fangelement von dem Anbindungspunkt zwischen Verbindungselement und Konsole bis zu einem Anbindungspunkt zwischen Konsole und Rahmen erstrecken.

Besonders einfach fällt die Konstruktion dann aus, wenn sich das Fangelement im wesentlichen parallel zu einem Schenkel der Konsole erstreckt. Auf diese Weise ist es möglich Fangelement und Konsole mit denselben Befestigungselementen sowohl an dem Verbindungselement als auch an dem Rahmen anzubinden, was sich positiv auf die Herstellungskosten auswirkt.

Im Folgenden wird die Erfindung anhand der in der Zeichnung dargestellten Ausführungsbeispiele des näheren erläutert. Es zeigen:
- Fig.1:: eine Seitenansicht einer erfindungsgemäßen Anbindung für ein Fahrerhaus;
- Fig.2:: eine Vorderansicht einer erfindungsgemäßen Anbindung für ein Fahrerhaus gemäß Fig. 1;
- Fig.3:: eine Seitenansicht einer erfindungsgemäßen Anbindung für ein Fahrzeug mit einer Konsole zur Erhöhung des Fahrerhauses und
- Fig.4:: eine Vorderansicht einer erfindungsgemäßen Anbindung gemäß Fig. 3.

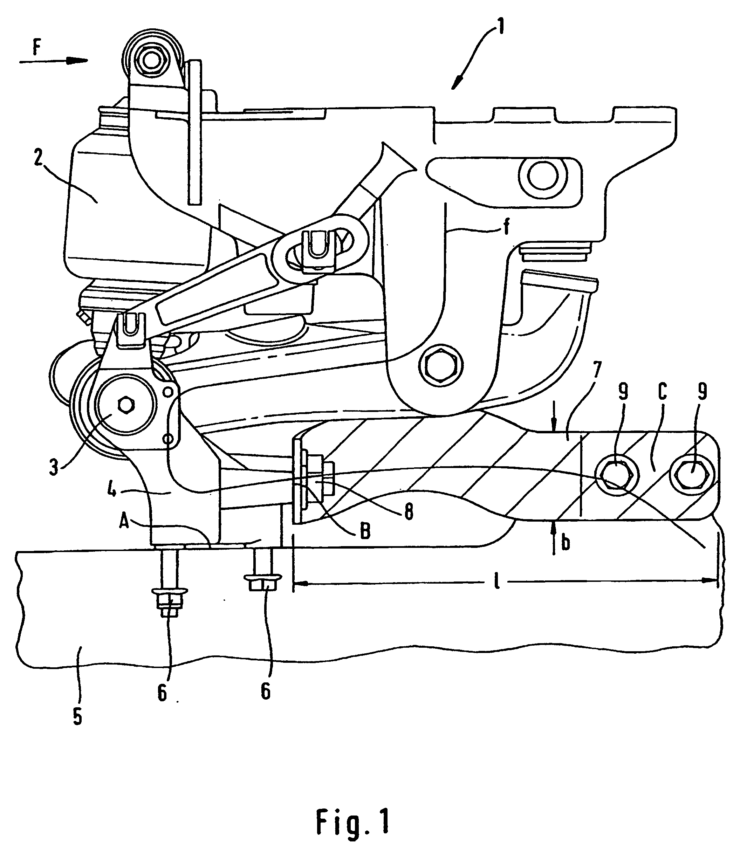

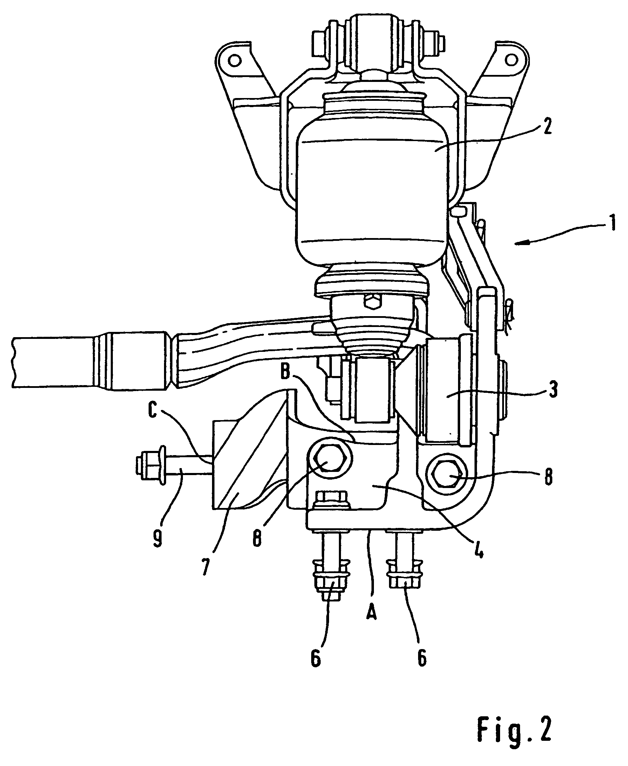

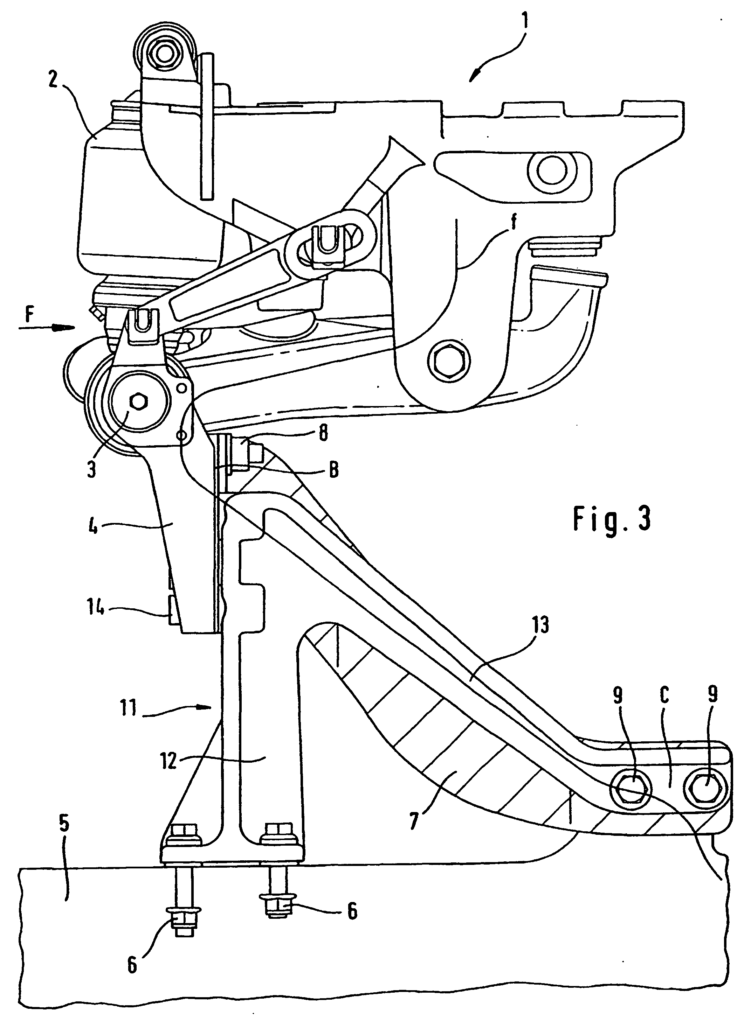

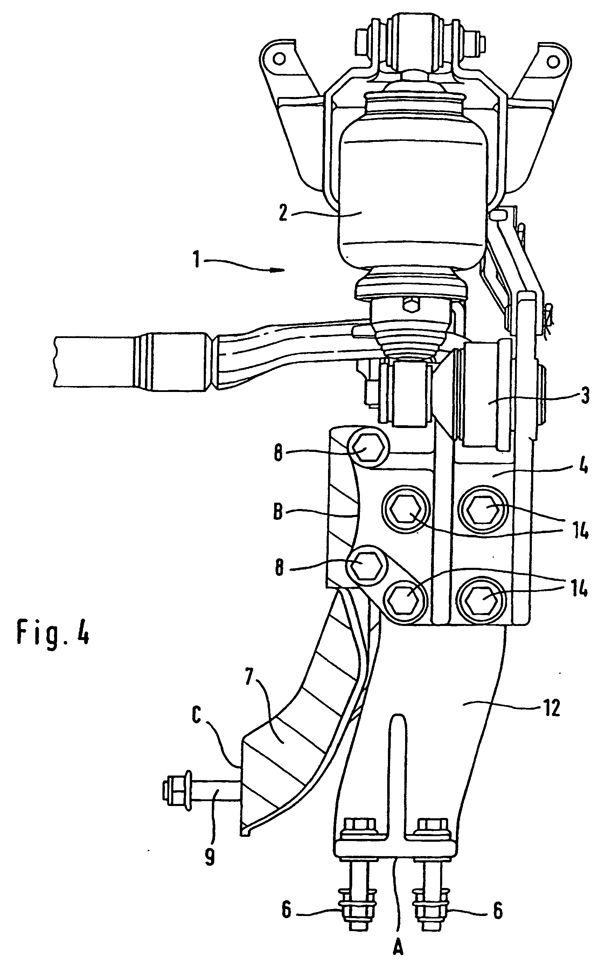

In Fig. 1 ist eine erfindungsgemäße Anbindung dargestellt. Von derartigen Anbindungen sind an einem Fahrzeug in der Regel zwei vorgesehen; auf jeder Seite des Fahrerhauses eine. Die linke Seite der Darstellungen gemäß den Figuren 1 und 3 weist in Richtung Fahrzeugfront; die Darstellungen gemäß den Figuren 2 und 4 zeigen die von vorne gesehen linke Anbindung des Fahrerhauses.

Die Anbindung weist eine Lagereinheit 1 auf. In der Lagereinheit ist unter anderem ein Federbeinelement 2 vorgesehen. An dem nach unten weisenden Ende des Federbeinelements 2 ist ein Lagerauge 3 angeordnet, über welches das Fahrerhaus kippbar angebunden wird. Die Lagereinheit 1 wird hier nicht detaillierter beschrieben, weil diese einen bekannten Aufbau hat, der zudem für die Erfindung nicht relevant ist.

Die Lagereinheit 1 ist an ihrem unteren Ende an dem Anbindungspunkt A mit einem Verbindungselement 4 verbunden. Über dieses Verbindungselement 4 wird die Lagereinheit an einen Fahrzeugrahmen 5 angebunden, der in den Figuren 1 und 3 nur schematisch dargestellt ist. Im gezeigten Ausführungsbeispiel ist das Verbindungselement 4 ein geschmiedetes Bauteil. Es ist über Schrauben 6 mit dem Rahmen 5 verbunden. Es sind 4 Schrauben vorgesehen. Das geht aus der Front-Darstellung gemäß Fig. 2 hervor.

In den Figuren 1 bis 4 ist ein Fangelement 7 schraffiert dargestellt. Die Schraffur dient der besseren Kennzeichnung dieses Bauteils und soll keine Schnittdarstellung andeuten. Das Fangelement 7 besteht aus einem gebogenen Blechstreifen. Dieser weist über seine gesamte Länge l im wesentlichen dieselbe Breite b auf. An den Enden ist er abgerundet ausgeführt und weist jeweils zwei Bohrungen zur Aufnahme von Befestigungselementen 8, 9 auf. An seinem nach vorne weisenden Ende ist das Fangelement 7 an dem Anbindungspunkt B über Schrauben 8 an dem Verbindungselement 4 angelenkt. Wie aus Fig. 2 hervorgeht sind zwei Schrauben 8 vorgesehen, die diese Verbindung herstellen. An seinem nach hinten weisenden Ende ist es an dem Anbindungspunkt C über Schrauben 9 an dem Rahmen 5 befestigt.

In der Seitenansicht gemäß Fig. 1 ist zu erkennen, dass das Fangelement 7 leicht geschwungen ausgeführt ist. Zwischen den beiden, an den Enden des Fangelementes 7 liegenden Anbindungspunkten B, C, die in etwa auf einer Höhe liegen, ist es leicht nach oben gewölbt.

In der Vorderansicht gemäß Fig. 2 ist erkennbar, dass das Fangelement 7 auch in Längsrichtung geschwungen ausgeführt ist. Der Anbindungspunkt C von dem Fangelement 7 an den Rahmen 5 liegt nicht auf der selben Linie, wie der Anbindungspunkt B des Fangelementes 7 an dem Verbindungselement 4, sondern näher an der Fahrzeugmitte.

Das in Fig. 3 dargestellte Ausführungsbeispiel unterscheidet sich von dem zuvor beschriebenen lediglich dadurch, dass das Verbindungselement 4 nicht direkt mit dem Rahmen 5 sondern über eine Konsole 11 mit dem Rahmen 5 verbunden ist. Die Konsole 11, die hier ein Gussteil ist, ist V-förmig ausgeführt und andersherum als ein V angeordnet. Sie weist zwei Schenkel 12 und 13 auf, von denen der Schenkel 12 nach vorne und der Schenkel 13 nach hinten weist und die im Bereich des Anbindungspunktes B zusammenlaufen. Die Konsole 11 ist an ihrem nach oben weisenden Ende an dem Anbindungspunkt B über vier Schrauben 14 an das Verbindungselement 4 geschraubt. Die Verbindung des Schenkels 12 mit dem Rahmen 5 an dem Anbindungspunkt A wird über Schrauben 6 hergestellt. Die Verbindung des Schenkels 13 mit dem Rahmen 5 an dem Anbindungspunkt C erfolgt über zwei Schrauben 9.

Wiederum schraffiert dargestellt ist das Fangelement 7. In diesem Ausführungsbeispiel verläuft es im wesentlichen parallel zu dem nach hinten weisenden Schenkel 13. Es ist an seinem nach vorne weisenden Ende an dem Anbindungspunkt B über zwei Schrauben 8 mit dem Verbindungselement und an seinem nach hinten weisenden Ende an dem Anbindungspunkt C über die zwei Schrauben 9 mit dem Rahmen verbunden. Das Fangelement 7 ist auf der Innenseite der Anbindung 1 angeordnet, dass heißt es liegt an der der Fahrzeugmitte zugewandten Seite des Schenkels 13 an.

In der Seitenansicht gemäß Fig. 3 ist zu erkennen, dass der Anbindungspunkt B des Fangelements 7 an das Verbindungselement 4 und der Anbindungspunkt C des Fangelements 7 den Rahmen 5 auf unterschiedlicher Höhe liegen, so dass das Fangelement 7 S-förmig ausgebildet ist. Entsprechend dem Fangelement 7 bei dem zuvor beschriebenen Ausführungsbeispiel ist das Fangelement 7 so ausgebildet, dass der Anbindungspunkt C des Fangelements 7 an dem Rahmen 5 von vorne gesehen näher zur Fahrzeugmitte angeordnet ist als der Anbindungspunkt A der Konsole 11 an dem Rahmen 5 bzw. als der Anbindungspunkt B des Fangelements 7 an dem Verbindungselement 4.

In beiden Ausführungsbeispielen besteht das Fangelement 7 aus einem Werkstoff mit einer hohen Duktilität. Im Gegensatz zu den Verbindungselementen 4 lässt es sich ohne Erreichen einer Versagensgrenze dadurch sehr gut verformen.

Im folgenden wird nun die Funktionsweise der erfindungsgemäßen Anbindung im Falle eines Aufpralls erläutert: Im Falle einer Krafteinleitung in Höhe der Anbindung gemäß Pfeil F in den Figuren 1 und 3 wird diese Kraft entlang der Linie f über die Lagereinheit 1 zunächst in das Verbindungselement 4 eingeleitet. Die Schrauben 6 sind so dimensioniert, dass sie, sobald eine vorgegebene Kraftgrenze überschritten wird, versagen. Daher wird die Kraft dann von dem Verbindungselement 4 über den Anbindungspunkt B in das Fangelement 7 und anschließend über den Anbindungspunkt C in den Rahmen 5 eingeleitet. Wenn der Versagensfall der Schrauben 6 eintritt, ist das Fahrerhaus immer noch über das Fangelement 7 mit dem Rahmen 5 verbunden. Durch die eingeleitete Kraft F wird sich das Fahrerhaus nach hinten verlagern, wobei das Fangelement 7 deformiert wird. Bei dieser Deformation wird ein Teil der Kraft F absorbiert. Das Fangelement 7 ist so ausgelegt, dass die Verbindung möglichst lange bestehen bleibt und somit das Fahrerhaus geführt verschoben und ein komplettes Abtrennen des Fahrerhauses vermieden wird.

Im Falle des Ausführungsbeispiels, das in den Figuren 3 und 4 dargestellt ist, wird die in Höhe des Pfeils F eingeleitete Kraft entlang der Linie f zunächst in das Verbindungselement 4 eingeleitet. Bei Überschreiten einer vorbestimmten Kraftgrenze versagen die Schrauben 6 und/oder der spröde Schenkel 12 oder 13 der Konsole 11, so dass die Kraft F dann von dem Verbindungselement 4 über den Anbindungspunkt B in das Fangelement 7 und anschließend über den Anbindungspunkt C in den Rahmen 5 eingeleitet wird. Auch bei diesem Ausführungsbeispiel ist das Fahrerhaus immer noch über das Fangelement 7 mit dem Rahmen 5 verbunden. Durch die Rückverlagerung des Fahrerhauses wird das Fangelement 7 deformiert, wobei das Fahrerhaus geführt verschoben wird.

## Patentansprüche

1. Anbindung für ein Fahrerhaus an einem Rahmen (5) eines Fahrzeugs mit
- einer gefederten Lagereinheit (1), die ein Verschwenken des Fahrerhauses ermöglicht sowie
- einem Verbindungselement (4), über welches eine Verbindung zwischen Lagereinheit und Rahmen hergestellt wird,
**dadurch gekennzeichnet,**
**dass** ein Fangelement (7) vorgesehen ist, welches mit seinem einen Ende an dem Verbindungselement und mit seinem anderen Ende an dem Rahmen festgelegt ist.

2. Anbindung für ein Fahrerhaus nach Anspruch 1,
**dadurch gekennzeichnet,**
**dass** der Anbindungspunkt (C) des Fangelements (7) an dem Rahmen (5) von vorne gesehen hinter einem Anbindungspunkt (A) des Verbindungselements (4) an dem Rahmen liegt.

3. Anbindung für ein Fahrerhaus nach Anspruch 1 oder 2,
**dadurch gekennzeichnet,**
**dass** das Fangelement (7) in Längsrichtung so ausgebildet ist, so dass der Anbindungspunkt (C) des Fangelements an dem Rahmen (5) von vorne gesehen näher zur Fahrzeugmitte angeordnet ist als der Anbindungspunkt (A) des Verbindungselements (4) an dem Rahmen.

4. Anbindung für ein Fahrerhaus nach einem der vorhergehenden Ansprüche,
**dadurch gekennzeichnet,**
**dass** das Fangelement (7) ein Blech ist.

5. Anbindung für ein Fahrerhaus nach einem der vorhergehenden Ansprüche,
**dadurch gekennzeichnet,**
**dass** das Fangelement (7) aus einem Werkstoff mit einer hohen Duktilität besteht.

6. Anbindung für ein Fahrerhaus nach einem der vorhergehenden Ansprüche,
**dadurch gekennzeichnet,**
**dass** das Fangelement (7) über eine Länge (1) im wesentlichen dieselbe Breite (b) hat.

7. Anbindung für ein Fahrerhaus nach einem der vorhergehenden Ansprüche,
**dadurch gekennzeichnet,**
**dass** die Endbereiche des Fangelements (7) abgerundet sind.

8. Anbindung für ein Fahrerhaus nach einem der vorhergehenden Ansprüche,
**dadurch gekennzeichnet,**
**dass** das Fangelement (7) Bohrungen zur Aufnahme von Befestigungselementen (8, 9) aufweist.

9. Anbindung für ein Fahrerhaus nach einem der vorhergehenden Ansprüche,
**dadurch gekennzeichnet,**
**dass** zwischen dem Verbindungselement (4) und dem Rahmen (5) eine Konsole (11) vorgesehen ist.

10. Anbindung für ein Fahrerhaus nach Anspruch 9,
**dadurch gekennzeichnet,**
**dass** die Konsole (11) an zwei voneinander beabstandeten Stellen (A, C) mit dem Rahmen (5) verbunden ist.

11. Anbindung für ein Fahrerhaus nach Anspruch 9 oder 10,
**dadurch gekennzeichnet,**
**dass** die Konsole (11) zwei Schenkel (12, 13) aufweist.

12. Anbindung für ein Fahrerhaus nach Anspruch 9, 10 oder 11,
**dadurch gekennzeichnet,**
**dass** die Konsole (11) aus einem Material mit spröden Werkstoffeigenschaften besteht.

13. Anbindung für ein Fahrerhaus nach einem der Ansprüche 9 bis 11,
**dadurch gekennzeichnet,**
**dass** sich das Fangelement (5) von dem Anbindungspunkt (B) zwischen Verbindungselement (4) und Konsole (11) bis zu einem Anbindungspunkt (C) zwischen Konsole und Rahmen erstreckt.

14. Anbindung für ein Fahrerhaus nach einem der Ansprüche 9 bis 12,
**dadurch gekennzeichnet,**
**dass** das Fangelement (7) im wesentlichen parallel zu einem Schenkel (13) der Konsole (11) verläuft.

## Claims

1. Linkage for a driver's cab to a frame (5) of a vehicle comprising
- a spring-mounted bearing unit (1), which allows pivoting of the driver's cab and
- a connecting element (4), via which a connection is produced between the bearing unit and frame, **characterised in that** a catch element (7) is provided, which is fixed by its one end to the connecting element and by its other end to the frame.

2. Linkage for a driver's cab according to claim 1, **characterised in that** the linkage point (C) of the catch element (7) to the frame (5), viewed from the front, is located behind a linkage point (A) of the connecting element (4) to the frame.

3. Linkage for a driver's cab according to claim 1 or 2, **characterised in that** the catch element (7) in the longitudinal direction is configured in such a way that the linkage point (C) of the catch element to the frame (5), viewed from the front, is arranged closer to the vehicle centre than the linkage point (A) of the connecting element (4) to the frame.

4. Linkage for a driver's cab according to any one of the preceding claims, **characterised in that** the catch element (7) is a metal sheet.

5. Linkage for a driver's cab according to any one of the preceding claims, **characterised in that** the catch element (7) consists of a material with high ductility.

6. Linkage for a driver's cab according to any one of the preceding claims, **characterised in that** the catch element (7) has substantially the same width (b) over a length (1).

7. Linkage for a driver's cab according to any one of the preceding claims, **characterised in that** the end regions of the catch element (7) are rounded.

8. Linkage for a driver's cab according to any one of the preceding claims, **characterised in that** the catch element (7) has holes for receiving fastening elements (8, 9).

9. Linkage for a driver's cab according to any one of the preceding claims, **characterised in that** a bracket (11) is provided between the connecting element (4) and the frame (5).

10. Linkage for a driver's cab according to claim 9, **characterised in that** the bracket (11) is connected to the frame (5) at two points (A, C) which are spaced apart from one another.

11. Linkage for a driver's cab according to claim 9 or 10, **characterised in that** the bracket (11) has two legs (12, 13).

12. Linkage for a driver's cab according to claim 9, 10 or 11, **characterised in that** the bracket (11) consists of a material with brittle material properties.

13. Linkage for a driver's cab according to any one of claims 9 to 11, **characterised in that** the catch element (5) extends from the linkage point (B) between the connecting element (4) and bracket (11) up to a linkage point (C) between the bracket and frame.

14. Linkage for a driver's cab according to any one of claims 9 to 12, **characterised in that** the catch element (7) extends substantially parallel to a leg (13) of the bracket (11).

## Revendications

1. Système d'attache pour une cabine de conduite sur un châssis (5) d'un véhicule comprenant
- une unité de palier (1) montée sur ressort, qui permet un basculement de la cabine de conduite et
- un élément de liaison (4), par lequel une liaison entre l'unité de palier et le châssis est établie,
**caractérisé en ce que**
un élément intercepteur (7) est prévu, lequel est fixé par l'une de ses extrémités à l'élément de liaison et par son autre extrémité au châssis.

2. Système d'attache pour une cabine de conduite selon la revendication 1,
**caractérisé en ce que**
le point d'attache (C) de l'élément intercepteur (7) sur le châssis (5) est situé, vu de l'avant, derrière un point d'attache (A) de l'élément de liaison (4) sur le châssis.

3. Système d'attache pour une cabine de conduite selon la revendication 1 ou 2,
**caractérisé en ce que**
l'élément intercepteur (7) est réalisé dans le sens de la longueur de telle sorte que le point d'attache (C) de l'élément intercepteur sur le châssis (5) est disposé, vu de l'avant, plus près du centre du véhicule que le point d'attache (A) de l'élément de liaison (4) sur le châssis.

4. Système d'attache pour une cabine de conduite selon l'une quelconque des revendications précédentes,
**caractérisé en ce que**
l'élément intercepteur (7) est une tôle.

5. Système d'attache pour une cabine de conduite selon l'une quelconque des revendications précédentes,
**caractérisé en ce que**
l'élément intercepteur (7) est à base d'un matériau présentant une ductilité élevée.

6. Système d'attache pour une cabine de conduite selon l'une quelconque des revendications précédentes,
**caractérisé en ce que**
l'élément intercepteur (7) a sensiblement la même largeur (b) sur une longueur (1).

7. Système d'attache pour une cabine de conduite selon l'une quelconque des revendications précédentes,
**caractérisé en ce que**
les zones d'extrémité de l'élément intercepteur (7) sont arrondies.

8. Système d'attache pour une cabine de conduite selon l'une quelconque des revendications précédentes,
**caractérisé en ce que**
l'élément intercepteur (7) présente des alésages pour le logement d'éléments de fixation (8, 9).

9. Système d'attache pour une cabine de conduite selon l'une quelconque des revendications précédentes,
**caractérisé en ce que**
une console (11) est prévue entre l'élément de liaison (4) et le châssis (5).

10. Système d'attache pour une cabine de conduite selon la revendication 9,
**caractérisé en ce que**
la console (11) est reliée au châssis (5) en deux endroits (A, C) espacés l'un de l'autre.

11. Système d'attache pour une cabine de conduite selon la revendication 9 ou 10,
**caractérisé en ce que**
la console (11) présente deux branches (12, 13).

12. Système d'attache pour une cabine de conduite selon la revendication 9, 10 ou 11,
**caractérisé en ce que**
la console (11) est à base d'un matériau présentant des propriétés de matériau cassantes.

13. Système d'attache pour une cabine de conduite selon l'une quelconque des revendications 9 à 11,
**caractérisé en ce que**
l'élément intercepteur (7) s'étend du point d'attache (B) entre l'élément de liaison (4) et la console (11) jusqu'à un point d'attache (C) entre la console et le châssis.

14. Système d'attache pour une cabine de conduite selon l'une quelconque des revendications 9 à 12,
**caractérisé en ce que**
l'élément intercepteur (7) est sensiblement parallèle à une branche (13) de la console (11).
